# EUROPEAN PATENT APPLICATION

(11) **EP 1 726 915 A1**
(43) Date of publication of application: **29.11.2006**
(21) Application number: 05011544.3
(22) Date of filing: 27.05.2005
(51) Int. Cl.: G01C 15/06, G01S 5/14

(54) **Active surveying pole**

(71) Applicant: Swissat AG, 8832 Wollerau (CH)
(72) Inventor: Trainer,Richard, West Yorkshire,BD22/9SB/GB (GB); Kurtovic,Zdenko, CH-8153 Rümlang (CH)
(74) Representative: Blum, Rudolf Emil

(57) **Abstract**

A surveying pole, with a tilt sensor, a flux gate compass, a radio transceiver, and associated electronics and battery, all integrated within the body of the surveying pole. The sensors are used to provide correction data allowing the position of the surveying point at the bottom end of the pole to be determined relative to the position of the top end of the pole. The position of the top end of the pole is determined using standard surveying sensors and methodology.

## Description

### Field of the Invention

The invention relates generally to surveying devices as used in measuring coordinates of target positions and more specifically to the surveying poles used to determine the precise position to be surveyed.

### Background of the invention

There is a wide variety of surveying equipment available, which when used in land surveying generally require that a prism or satellite navigation antenna be mounted at the top end of a surveying pole, the bottom end of which terminates in a point, the apex of the point representing the position to be observed.

The position of a satellite navigation antenna is found by using a system of distance triangulation algorithms based upon the timing of signals emitted by satellites in known orbits around the earth, the relative timing of these signals at the antenna, allows the position of the antenna to be calculated. Various strategies are used to improve the accuracy of the calculations, such as the reception of two frequencies broadcast by the satellites to allow for compensation of atmospheric effects, and further refinement by using a second antenna close by, positioned at a known point, constantly broadcasting correction signals for use by the satellite navigation system, whose position is to be determined accuracy's of less than one centimetre may be obtained using such systems.

The position of a prism may be found by using an electronic theodolite equipped with an accurate laser range meter, commonly called a total station. The total station is set up either on a known position and the orientation of the horizontal angle measuring system calibrated by pointing the instrument at a second known point. Alternatively, a total station may be positioned by observing the relative positions of a plurality of known points and performing a triangulation transformation on the angle and/or distance measurements so obtained to find the current position of the total station within the coordinate system defined by the coordinates of the known points used for the reference measurements. Total stations generally incorporate a tilt sensor used to calibrate the vertical tilt sensor. After setting up, the total station may be pointed at the centre of a prism and the distance and angle measurements to the prism are used to calculate the position of the prism within the coordinate system. Accuracy's in the range of millimetres may be obtained using such systems.

When performing a survey, it is necessary to keep the survey pole bearing the prism or satellite navigation antenna vertical, using an integrated spirit bubble, or plumb line, in order to ensure that the centre of the prism or antenna is directly above the point at the bottom of the pole, ensuring that the point at the bottom of the survey pole is at the same horizontal coordinate as the position measured at the top of the pole.

The altitude of the point on the ground is then determined by measuring the altitude of the centre of the prism or satellite navigation antenna using standard surveying techniques, and then subtracting the distance between the point at the bottom of the pole and the centre of the prism or satellite navigation antenna.

It is however not always possible to place the point at the base of the survey pole exactly upon the point which is to be observed, while keeping the pole vertical, for example when measuring the base of a wall. In such cases the observations made must include offset values which are generally manually measured using tape measures and entered into the surveying apparatus as factors to be taken into account in the position calculation. This increases the amount of time needed to perform a single observation and leads to a greater possibility of errors being introduced due to incorrect observation and entry of the offsets required.

An additional problem is the time taken to align the pole vertically to ensure that the prism or antenna is indeed directly above the base point of the pole. This can take several seconds and is an additional source of errors.

Various solutions have been suggested to the problem of determining the base position accurately, such as making several observations while the pole is tilted at various angles, and interpolating the centre of the measurement sphere from them (U.S. Pat. No. 5,929,807). This is time consuming and does not solve the problem of offset measurement, in particular for corners where little movement is possible.

Other solutions have been suggested using extensible poles with tilt sensors (U.S. Pat No. 5,512,905) as part of an integrated satellite navigation system - this limits the application due to the large amount of cabling required to connect the sensors, and the high level of mechanical complexity involved.

A further suggestion is made in (U.S. Pat No. 6,633,256), which combines the above two approaches.

An objective of the present invention is to present a generic surveying component which can be generally and simply used in combination with existing and future surveying equipment without modification to that equipment which allows fast observations to be performed without separate entry of offset values, by placing the point of the active surveying pole directly at the point to be measured, taking the tilt and orientation of the pole into account, and without time consuming vertical orientation of the survey pole. Another objective of the current invention is to provide a simple, low cost surveying instrument by adding an optical sight to the active survey pole as described.

### SUMMARY OF THE INVENTION

The object of the current invention is to provide a self contained active survey pole as a survey component which can be integrated into a variety of surveying configurations preferably with no electrical cable connection between the components, allowing a more efficient mode of operation, including direct observation of points which cannot be observed directly with a vertical staff, and obviating the need for vertical orientation of the staff.

To this end the active survey pole comprises a tilt sensor, a flux-gate compass, control electronics, preferably a radio link and preferably a battery to power the system. The bottom of the pole is tapered to a point coaxial with the axis of the pole. The top of the pole is preferably a standard survey fixture allowing a prism or satellite navigation antenna to be attached to it, with the central measurement point of the attached component coaxial with the axis of the pole.

In place of the prism or antenna or in combination therewith, an optical sight may be provided to allow the pole to be used as a low cost free-standing surveying system, without additional equipment.

### IN THE DRAWINGS

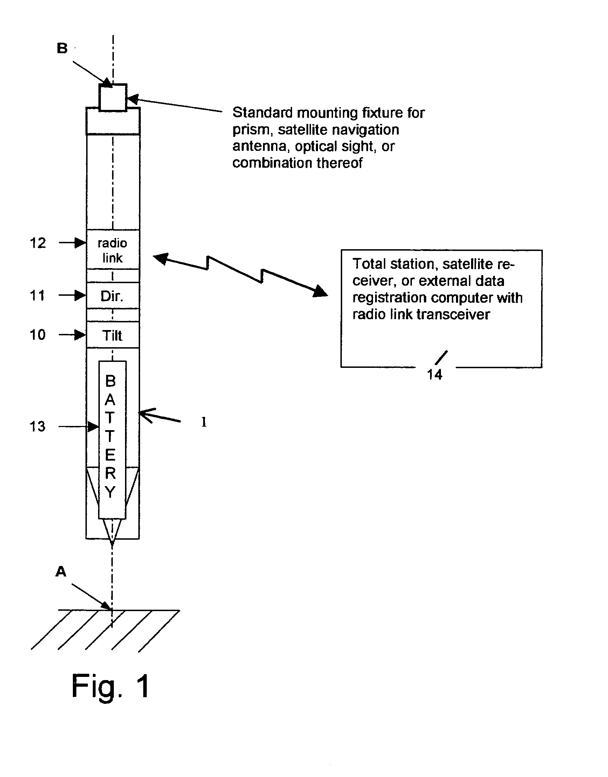

Fig 1. is a block diagram of the preferred embodiment of the active survey pole, indicating the radio link connection to an external surveying instrument or computer.

### DETAILED DESCRIPTION OF PREFERRED EMBODIMENTS

Fig.1 illustrates an embodiment of the present invention without an attachment. In its simplest form, the pole 1 may be used with an optical sight aligned perpendicular to the axis of the pole. In this form a computer capable of receiving the tilt and direction information via the preferred radio link 12 (such as the standard "Bluetooth" protocol) running a suitable software package, in which some coordinates of points visible in the immediate vicinity of the area to be surveyed have been defined, and the local magnetic declination is entered into the computer 14, or loaded from stored data files. This allows the direction information to be converted into direction information within the coordinate system used by the surveyor.

In one mode of operation, the pointed end "A" of the pole 1 is positioned on a known point in the survey, the flux-gate compass 11 within the pole gives directional information on any object aligned within the optical sight. If the object to be observed is on the same horizontal plane as the base of the pole, a program within the computer using simple trigonometry may be used to calculate the position of the object in the sight, using the angle form the tilt sensor 10, the angle information from the flux gate compass 11 and the length of the pole between the point "A" and the aiming axis of the optical sight. Since the tilt sensor and the flux-gate compass each have accuracy's of the order of 0.1 degrees, the positional accuracy of the target point can be measured to approximately 2 cm at a distance of 20 meters, which is adequate for many applications, such as finding buried pipes etc.

In another mode of operation, an object may be measured by using the flux-gate compass, the tilt sensor and the optical sight for taking bearing measurements on a target point and relocating the pole to another known position and repeating the observation of the bearings to the target point, and generating the target position using triangulation algorithms within the computer controller software.

In a third mode of operation, the pole equipped with an optical sight may be positioned freely in the area, and the position of the pole determined by using the sensors and the optical alignment to take bearings on known points within the local survey to calculate the position of the pole using a triangulation algorithm. After determination of the pole position, observations may be made of other points as already discussed.

A further preferred embodiment of the invention is the case in which a prism is mounted at position "B". In this case the use of a radio link 12 to send the tilt and direction information to the total station or data registration computer 14 is preferred, as it is impractical to use a long cable between the prism pole and the total station or data registration computer in the field. In this case, the distance over which the tilt sensor and flux-gate compass correction data must be applied is limited to the distance between the point "A" of the survey pole and the optical centre of the prism. An embodiment in which the computer which calculates and registers the data is connected to the total station via a radio link, as well as the radio link to the surveying pole is also envisioned.

A further preferred embodiment of the invention is the case in which a satellite navigation antenna is mounted at position "B". In this case the use of a second radio link to send the satellite navigation coordinates to the data registration computer in the field can also be useful in order to minimise the number of cables, improving operator mobility, safety and efficiency.

Thus the active surveying pole and the method to determine positions therewith comprises preferably a hollow surveying pole, one end of which terminates in a point "A" to precisely determine the point which is to be surveyed, the opposite end of which "B" has preferably a standard mounting fixture for a surveying sensor such as a GPS antenna or a prism, preferably a standard surveying sensor attached to said mounting "B" of the pole, mounted such that the survey observation position is coaxial with the longitudinal axis of the surveying pole, a tilt sensor, preferably totally or partly within the pole, for determining the tilt of the pole, thus allowing the calculation of the horizontal displacement between the point "A" and the surveying sensor at "B", a flux-gate compass, preferably totally or partly within the pole, to allow the direction of tilt of the pole relative to magnetic north to be determined, thus allowing an absolute displacement between point "A" and the surveying sensor at "B" to be determined, further preferably a radio transceiver, such as a "Bluetooth" link, a battery and associated electronics preferably totally or partly within the pole to allow the tilt and directional information to be sent to an external system without the need for external cabling.

Further it is preferred to have in the system and method an external satellite navigation system including an integrated computing system whereby the receiving antenna for the satellite navigation signal is mounted to position "B" with means of receiving the tilt and direction information provided by the active surveying pole and calculating the displacement of the surveying point "A" of the pole to the survey observation position of the surveying sensor mounted at fixture end "B" of the active surveying pole, and thus integrating the displacement information to provide accurate coordinate observations of the surveying point "A". Further it is preferred to have an external electronic theodolite equipped with a laser range-finding system (total station) whereby the target prism for the laser ranging system is mounted to fixture "B", with means of receiving the tilt and direction information provided by the active surveying pole and calculating the displacement of the surveying point "A" of the pole to the survey observation position of the surveying sensor mounted at fixture end "B" of the active surveying pole, and thus integrating the displacement information to provide accurate coordinate observations of the surveying point "A". Further it is preferred to have an external computing system, whereby an optical sight is used as a survey sensor, with means of receiving the tilt and direction information provided by the active surveying pole and calculating the displacement of the surveying point "A" of the pole to the survey observation position of the optical sight mounted at fixture end "B" of the active surveying pole, and thus integrating the displacement information to provide accurate coordinate observations of the surveying point "A", the position of the pole to be determined by observing one or more known points and using the directional information from the active surveying pole to determine the position of the pole within the coordinate system used, allowing the system to be used as a complete surveying system across short distances. Further it is preferred to have an external computing system and an external satellite navigation system whereby the receiving antenna for the satellite navigation signal is mounted to the fixture at position "B", whereby the computing system is able to receive and interpret the positioning information gained by the satellite navigation system, and integrate the positioning information generated by the active surveying pole, thus integrating the displacement information to provide accurate coordinate observations of the surveying point "A", allowing the active pole to be used in combination with any satellite navigation system without modifying existing systems.

Further it is preferred to have in the system and in the method an external computing system and an external electronic theodolite equipped with a laser range-finding system (total station), whereby the target prism for the laser ranging system is mounted to fixture "B", whereby the computing system is able to receive and interpret the positioning information gained standard surveying methods from the total station and integrate the positioning information generated by the active surveying pole, thus integrating the displacement information to provide accurate coordinate observations of the surveying point "A", allowing the active pole to be used in combination with any total station system without modifying existing systems. Further it is preferred to have a navigation system whereby the receiving antenna for the satellite navigation signal is mounted on top of the prism which is mounted to the fixture at position "B", allowing the use of satellite navigation information where conditions allow, and position information from an external electronic theodolite equipped with a laser range-finding system (total station) where the satellite navigation signal is not available, or of insufficient quality; the computing system allows for the appropriate length of the vector to be applied when calculating the position of the desired position "A" to be automatically applied depending upon which observation method is active. Further it is preferred to have a system and a method for determining a position with the pole system wherein the position and altitude of the surveying point "A" is determined by determining the position and altitude of the surveying sensor mounted at "B" and applying the tilt and direction information obtained from the active pole system projected along the vector of known length between the surveying point "A" and the centre of the surveying sensor mounted at "B".

Although the present invention has been described in terms of the presently preferred embodiment, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. An active surveying pole system, comprising:
a hollow surveying pole, one end of which terminates in a point "A" to precisely determine the point which is to be surveyed, the opposite end of which "B" has preferably a standard mounting fixture for a surveying sensor such as a GPS antenna or a prism; preferably a standard surveying sensor attached to said mounting "B" of the pole, mounted such that the survey observation position is coaxial with the longitudinal axis of the surveying pole; a tilt sensor, preferably totally or partly within the pole, for determining the tilt of the pole, thus allowing the calculation of the horizontal displacement between the point "A" and the surveying sensor at "B"; a flux-gate compass, preferably totally or partly within the pole, to allow the direction of tilt of the pole relative to magnetic north to be determined, thus allowing an absolute displacement between point "A" and the surveying sensor at "B" to be determined; preferably a radio transceiver, such as a "Bluetooth" link, a battery and associated electronics preferably totally or partly within the pole to allow the tilt and directional information to be sent to an external system without the need for external cabling.

2. The system of claim 1, further comprising, an external satellite navigation system including an integrated computing system whereby the receiving antenna for the satellite navigation signal is mounted to position "B" with means of receiving the tilt and direction information provided by the active surveying pole and calculating the displacement of the surveying point "A" of the pole to the survey observation position of the surveying sensor mounted at fixture end "B" of the active surveying pole, and thus integrating the displacement information to provide accurate coordinate observations of the surveying point "A".

3. The system of claim 1, further comprising, an external electronic theodolite equipped with a laser range-finding system (total station) whereby the target prism for the laser ranging system is mounted to fixture "B", with means of receiving the tilt and direction information provided by the active surveying pole and calculating the displacement of the surveying point "A" of the pole to the survey observation position of the surveying sensor mounted at fixture end "B" of the active surveying pole, and thus integrating the displacement information to provide accurate coordinate observations of the surveying point "A".

4. The system of claim 1, further comprising, an external computing system, whereby an optical sight is used as a survey sensor, with means of receiving the tilt and direction information provided by the active surveying pole and calculating the displacement of the surveying point "A" of the pole to the survey observation position of the optical sight mounted at fixture end "B" of the active surveying pole, and thus integrating the displacement information to provide accurate coordinate observations of the surveying point "A", the position of the pole to be determined by observing one or more known points and using the directional information from the active surveying pole to determine the position of the pole within the coordinate system used, allowing the system to be used as a complete surveying system across short distances.

5. The system of claim 1, further comprising, an external computing system and an external satellite navigation system whereby the receiving antenna for the satellite navigation signal is mounted to the fixture at position "B", whereby the computing system is able to receive and interpret the positioning information gained by the satellite navigation system, and integrate the positioning information generated by the active surveying pole, thus integrating the displacement information to provide accurate coordinate observations of the surveying point "A", allowing the active pole to be used in combination with any satellite navigation system without modifying existing systems.

6. The system of claim 1, further comprising, an external computing system and an external electronic theodolite equipped with a laser range-finding system (total station), whereby the target prism for the laser ranging system is mounted to fixture "B", whereby the computing system is able to receive and interpret the positioning information gained standard surveying methods from the total station and integrate the positioning information generated by the active surveying pole, thus integrating the displacement information to provide accurate coordinate observations of the surveying point "A", allowing the active pole to be used in combination with any total station system without modifying existing systems.

7. The system of claim 6, further comprising, a navigation system whereby the receiving antenna for the satellite navigation signal is mounted on top of the prism which is mounted to the fixture at position "B", allowing the use of satellite navigation information where conditions allow, and position information from an external electronic theodolite equipped with a laser range-finding system (total station) where the satellite navigation signal is not available, or of insufficient quality; the computing system allows for the appropriate length of the vector to be applied when calculating the position of the desired position "A" to be automatically applied depending upon which observation method is active.

8. A method for determining a position with the pole system according to claims 1 to 7 wherein the position and altitude of the surveying point "A" is determined by determining the position and altitude of the surveying sensor mounted at "B" and applying the tilt and direction information obtained from the active pole system projected along the vector of known length between the surveying point "A" and the centre of the surveying sensor mounted at "B".

9. A method according to claim 8 and any of claims 2 to 7.
